(19) Europäisches Patentamt
European Patent Office
Office européen des brevets

(11) **EP 1 343 621 B1**

(12) **EUROPÄISCHE PATENTSCHRIFT**

(45) Veröffentlichungstag und Bekanntmachung des Hinweises auf die Patenterteilung:
**24.08.2005 Patentblatt 2005/34**

(51) Int Cl.⁷: **B29C 45/77**
// (B29C45/57, G11B7:26)

(21) Anmeldenummer: **01271939.9**

(22) Anmeldetag: **17.12.2001**

(86) Internationale Anmeldenummer:
**PCT/CH2001/000717**

(87) Internationale Veröffentlichungsnummer:
**WO 2002/051615 (04.07.2002 Gazette 2002/27)**

(54) **VERFAHREN NUD VORRICHTUNG ZUM SPRITZGIESSEN VON GEWICHTSGENAUEN FLACHEN OPTISCHEN DATENTRÄGER**

METHOD AND DEVICE FOR INJECTION MOULDING FLAT OPTICAL DATA SUPPORTS WHICH HAVE A PRECISE WEIGHT

PROCEDE ET DISPOSITIF POUR LE MOULAGE PAR INJECTION DE SUPPORTS DE DONNEES OPTIQUES PLATS AYANT UN POIDS PRECIS

(84) Benannte Vertragsstaaten:
**AT BE CH CY DE DK ES FI FR GB GR IE IT LI LU MC NL PT SE TR**

(30) Priorität: **22.12.2000 CH 253300**

(43) Veröffentlichungstag der Anmeldung:
**17.09.2003 Patentblatt 2003/38**

(60) Teilanmeldung:
**05006085.4**

(73) Patentinhaber: **Netstal-Maschinen AG
8752 Näfels (CH)**

(72) Erfinder: **WEINMANN, Robert
CH-8872 Weesen (CH)**

(74) Vertreter: **Ackermann, Ernst
Patentanwalt
Egghalden
9231 Egg-Flawil (CH)**

(56) Entgegenhaltungen:
**EP-A- 0 890 426**          **US-A- 4 439 132**

- **PATENT ABSTRACTS OF JAPAN vol. 015, no. 407 (M-1169), 17. Oktober 1991 (1991-10-17) & JP 03 169526 A (NISSEI PLASTICS IND CO), 23. Juli 1991 (1991-07-23)**
- **PATENT ABSTRACTS OF JAPAN vol. 1996, no. 09, 30. September 1996 (1996-09-30) & JP 08 118430 A (MATSUSHITA ELECTRIC IND CO LTD), 14. Mai 1996 (1996-05-14)**
- **PATENT ABSTRACTS OF JAPAN vol. 010, no. 151 (M-483), 31. Mai 1986 (1986-05-31) & JP 61 005913 A (SUMITOMO BAKELITE KK), 11. Januar 1986 (1986-01-11)**
- **PATENT ABSTRACTS OF JAPAN vol. 1999, no. 09, 30. Juli 1999 (1999-07-30) & JP 11 120628 A (MEIKI CO LTD), 30. April 1999 (1999-04-30)**

EP 1 343 621 B1

**Beschreibung**

**Technisches Gebiet**

Die Erfindung betrifft ein Verfahren zum Spritzgiessen von gewichtsgenauen, flachen optischen Datenträgern, wobei in einer ersten Phase eine dosierte Menge Schmelze in einen vorgegebenen Formhohlraum eingespritzt und anschliessend auf die noch flüssige Schmelze ein Prägedruck aufgebracht wird. Die Erfindung betrifft ferner eine Antriebs- und Steuereinrichtung für Spritzgiessformen mit steuer-/regelbarem Einspritz- und Prägeschritt, insbesondere für die Herstellung von flachen Datenträgern, wobei die Steuereinrichtung einen Detektor für wenigstens einen relevanten Prozessparameter für den Prägeverlauf aufweist.

**Stand der Technik**

Die Gattung der Spritzgiessmaschinen für die Herstellung von flachen Datenträgern weist grundsätzlich zwei Formhälften auf. Die eine bewegliche, erste Formhälfte wird mittels Antriebssystem gegenüber einer Antriebsträgerplatte für das Formschliessen sowie das Formöffnen bewegt. Die Formbewegung kann z.B. auf Grund einer Weg-, einer Druck- und/oder einer Geschwindigkeitsfunktion gesteuert werden. Die GB-PS 1 226 118 schlägt vor, den Geschwindigkeitsablauf der Formbewegung für bestimmte Abschnitte eines Giesszyklusses nach vorgegebenen Programmen zu steuern. Bei der Verwendung von Hydraulikzylindern als Antriebssystem lässt sich die Geschwindigkeit der beweglichen Formhälfte über die Oelmenge steuern und/oder regeln. Mit einem zusätzlichen Oeltemperaturparameter kann so mit hoher Genauigkeit ein optimaler Geschwindigkeitsverlauf der bewegbaren Formhälfte sichergestellt werden.

Ein weiteres bekanntes Beispiel der selben Gattung für die Anwendung einer Geschwindigkeitssteuerung ist in der DE-PS 37 25 167 für die Herstellung von dünnen Platten beschrieben. Besonders für die Produktion von optischen Datenträgern oder CD's werden zwei Phasen des Herstellzyklusses streng unterschieden:

-    erstens der Einspritzschritt
-    zweitens der Prägeschritt.

Die bewegbare erste Formhälfte wird vor dem Einspritzen an eine vorbestimmte Position, für die Bildung des Kompressionsspaltes, gefahren und wird etwa für die Zeitdauer des Einspritzens in der Position gehalten. Danach wird unter Anwendung des Kompressionsdruckes die entsprechende Platine bzw. die erste Formhälfte bis zur Aufhebung des Kompressionsspaltes an die zweite feste Formhälfte gestossen. Die genannte DE 37 25 167 schlägt dazu vor:

-    dass die geschwindigkeitsgesteuerte Bewegung der ersten Platine erst nach dem Einspritzen des Kunststoffes erfolgt, und
-    dass das Geschwindigkeitsprogramm, bezogen auf aufeinanderfolgende Positionen der ersten Werkzeughälfte
-    und/oder bezogen auf aufeinanderfolgende Zeitintervalle der Bewegung der ersten Werkzeughälfte definiert ist.

Es wird somit eine exakt bestimmte Spaltgrösse verlangt bzw. vorgegeben, der flüssige Kunststoff dosiert eingespritzt und danach mit einem vorgegebenen Geschwindigkeitsprogramm die Prägung vorgenommen. Die Teilschritte für den Prägeablauf auf der Basis eines Geschwindigkeitsprogrammes können entweder nach bestimmten Spaltpositionen oder Zeitintervallen erfolgen. Zusätzlich werden einzelne Abschnitte, besonders am Ende des Prägeschrittes, druckgesteuert sichergestellt. Voraussetzung dieser Vorschläge ist eine exakte Spaltmessung. Die Qualität der ganzen Steuerung/Regelung ist deshalb abhängig von der Genauigkeit der Spaltmessung. Eine Spaltmessung zwischen den Platinen ist eher aufwendig, so dass in der Praxis ein Ersatzmass, z.B. eine Abstandsmessung zwischen den Formträgerplatten, vorgenommen wird. Eine solches Ersatzmass ist von Natur aus mit zusätzlichen Fehlermöglichkeiten behaftet und verlangt einen sequenziellen Ablauf. Die geschwindigkeitsgesteuerte Bewegung kann deshalb erst nach Anfahren einer exakt definierten Stelle bzw. an einem definierten Spalt beginnen. Ein Ineinanderfliessen von Abläufen zwischen dem Einspritzen und dem Prägen wird gemäss der Lehre der DE 37 25 167 abgelehnt.

Ein anderes Verfahren zur schrittweisen Formung eines Gegenstandes aus plastifiziertem thermoplastischem Harz, unter Anwendung einer Spritzgussmaschine, wird in der EP 0 244 783 vorgeschlagen:

•    Es wird als erster Schritt ein vorvergrösserter, geschlossener Formhohlraum gebildet, der zur Aufnahme des plastifizierten Harzes geeignet ist, ohne dass es darin zu einem nennenswerten Gegendruck kommt. Der Formhohlraum muss ein Volumen aufweisen, das grösser ist als das vom plastifizierten, zur Einspritzung vorgesehene Harz unter dem Einspritzdruck maximal eingenommene Volumen.
•    In den vorvergrösserten Formhohlraum wird danach ein Volumen des plastifizierten Harzes eingespritzt, das ein wenig grösser ist als das Volumen des zu formenden Gegenstandes.

- Von der Maschine wird anschliessend eine kontrollierte Kraft so angewandt, dass das Volumen des Formhohlraums reduziert wird, wodurch das darin befindliche Harz neu verteilt wird und
- die angewandte Kraft danach beibehalten wird, zumindest bis zum Erstarren bzw. Erkalten des Harzes, wodurch dieses im Formhohlraum komprimiert wird.
- Der Kompressionsschritt wird jedoch schon eingeleitet, bevor der Einspritzschritt ganz abgeschlossen ist.

Die letzte Bedingung, wonach der Kompressionsschritt schon eingeleitet sein muss, bevor der Einspritzschritt abgeschlossen ist, ist eine Bedingung, welche nicht in allen Fällen vorteilhaft ist. Die Praxis zeigt, dass selbst wenn alle Möglichkeiten der Steuer- und Regeltechnik im Hinblick auf die baulichen Elemente, wie dargestellt wurde, ausgeschöpft sind, die Endprodukte, vor allem in Bezug auf das Gewicht jeder einzelnen Platte, unverhältnismässig grosse Variationen aufweisen können. Testwägungen haben gezeigt, dass innerhalb einer Seriefabrikation im Extremfalle Gewichtsunterschiede bis zu 10% zwischen der leichtesten und der schwersten CD durchaus festgestellt werden können. Vom Erfinder ist erkannt worden, dass die äusseren Parameter wie

- exaktes Voreinstellen des Kompressionsspaltes
- exakte Bedingungen für den Übergang von der Spritz- in die Prägephase
- sowie abschnittsweises, exaktes Geschwindigkeitsführen der Prägephase

zwar wichtig sind, aber nur die eine Hälfte der möglichen Fehlerquellen berücksichtigen. Dies gilt zumindest, soweit dies die Gewichtsgenauigkeit der einzelnen Endprodukte betrifft. Die bisherige Fachmeinung war, dass identische bau- und regeltechnische Voraussetzungen Garant seien für ein identisches Endprodukt. Übersehen wurde dabei eine grundlegende Fehlerquelle, nämlich das Schliessverhalten der Rückstromsperre. Die plastifizierte Kunststoffmasse wird im Einspritzzylinder aufbereitet und durch einen mit sehr hoher Genauigkeit gesteuerten/geregelten Antrieb der Einspritzschnecke in die Kavität der Spritzgiessform gepresst. Der Spritzzylinder wird mit hoher Präzision hergestellt. Der Weg für die Linearbewegung der Förderschnecke lässt sich über eine Wegsteuerung ebenfalls sehr genau festlegen. Daraus wurde bisher gefolgert, dass die Dosierung der Masse mit genügender Genauigkeit erfolgt. Man suchte deshalb mögliche Fehler am Endprodukt auf der anderen Seite, nämlich beim Prägen. Beim klassischen Spritzgiessen wird höchste Genauigkeit, auch im Hinblick auf die Konstanz der Gewichtsgenauigkeit der Endprodukte, erreicht. Dies ist vor allem auf die Tatsache zurückzuführen, dass nach dem Einspritzen eine relativ lange Nachdruckphase gängige Praxis ist. Während der Nachdruckphase, welche über die Bewegung der Einspritzschnecke kontrolliert wird, werden kleinste Mengenvariationen der zuvor eingespritzen flüssigen Kunststoffmasse korrigiert. Bei der Herstellung von flachen optischen Datenträgern kennt man die sogenannte Nachdruckphase nicht. An die Stelle der Nachdruckphase ist ein vollflächiges Zusammendrücken der Giessform Voraussetzung, damit überhaupt die Oberflächenstruktur mit den eingeprägten Daten in der extrem hohen Qualität erreichbar ist. Durch die Platzverhältnisse und die extrem kurzen Zykluszeiten bedingt ist ein aktives bzw. gesteuertes Schliessen der Einspritzdüse unrealistisch.

Bei der EP 0 890 426 sowie der JP 3 169 526 wird am Ende der Einspritzphase auf Grund eines gemessenen Druckwertes die Stanzbewegung ausgelöst und dabei der Schneckenvorraum von der Kavität der Form getrennt. Beide Lösungen gehen von einer exakt eindosierten Schmelzemenge aus. Eine Korrektur ist nach Verschliessen des Stanzers nicht mehr möglich.

Der Erfindung wurde nun die Aufgabe gestellt, ein Verfahren und eine Vorrichtung zu entwickeln, welche eine höchste Qualität des Endproduktes und vor allem auch eine hohe Gewichtsgenauigkeit der flachen Datenträger gegebenenfalls mit einer Fehlerkorrektur sicherstellen können.

**Darstellung der Erfindung**

Die erfindungsgemässe Antriebs- und Steuereinrichtung ist dadurch gekennzeichnet, dass am Ende der Einspritzphase oder im ersten Abschnitt des Prägeschrittes bei noch flüssiger Schmelze wenigstens ein relevanter Prozessparameter insbesondere des Druckes bzw. des Druckverlaufes und/oder der Prägekraft bzw. des Prägekraftverlaufes und/oder des Weges und/oder der Zeit detektiert und ein allfälliger Mengenfehler der Schmelze im Formhohlraum (24) im ersten Abschnitt der Prägephase, vor Einfrieren des Angusses, durch Beeinflussung der Strömungsverhältnisse der Schmelze zwischen dem Formhohlraum (Kav) und dem Massepolster (MP) vor der Einspritzdüse (7) korrigiert wird. Für besonders vorteilhafte Ausgestaltungen des Verfahrens wird auf die Ansprüche 2 bis 12 Bezug genommen.

Die erfindungsgemässe Antriebs- und Steuereinrichtung ist dadurch gekennzeichnet, dass die Steuereinrichtung ausgelegt ist und Sensoren aufweist, derart, dass ein allfälliger Mengenfehler der Schmelze im Formhohlraum (24) am Ende der

Einspritzphase oder im ersten Abschnitt der Prägephase detektierbar ist und in der Prägephase vor Einfrieren des Angusses durch Beeinflussung der Strömungsverhältnisse der Schmelze zwischen dem Formhohlraum und dem Massepolster vor der Einspritzdüse korrigierbar ist. Für besonders vorteilhafte Ausgestaltungen der Vorrichtung wird auf die Ansprüche 14 bis 16 Bezug genommen.

Die neue Erfindung geht von zwei grundlegenden Erkenntnissen aus, dass erstens selbst mit der höchsten Beherrschung aller äusseren Parameter, wie der Wegfunktion, der Geschwindigkeitsfunktion oder dem Messen von exakten Abständen auch bei extrem hohem Aufwand das Ziel so lange nicht erreicht werden kann, bis nicht auch die inneren Parameter unter Kontrolle gehalten werden. Wie weiter vorne dargelegt, werden nach dem Einspritzvorgang die angesprochenen inneren Parameter durch den Druck der Schmelze dominiert. Die Temperatur der Schmelze ist zwar ein ebenso wichtiger Faktor, kann aber nach Abschluss der Einspritzphase nur noch über die Kühlung beeinflusst werden. Beim klassischen Spritzgiessen wird die Schmelze in der Kavität so lange druckkontrolliert, bis noch keine nennenswerte Verfestigung erfolgt ist. Weil bei der Herstellung von flachen optischen Datenträgern nach Abschluss des Einspritzschrittes die Druckkontrolle durch die Prägekraft übernommen wird, machte im Stand der Technik eine Nachdruckkontrolle an sich über die Einspritzschnecke wenig Sinn. Die zweite Erkenntnis liegt darin, dass der Übergang von der flüssigen Schmelze in den erstarrten Zustand im Bereich von Millisekunden erfolgt. Man spricht dabei von Einfrieren des Angusses bzw. der Engstelle, durch welche die Masse in die Kavität gespritzt wird. Ist die Masse im Angussbereich eingefroren, so kann von aussen auf die Menge des eingespritzten Materials nicht mehr Einfluss genommen werden, da die Masse zwischen den Formen einerseits sowie dem Anguss andererseits vollständig eingeschlossen ist. Eine Einflussnahme ist somit nur am Ende der Einspritzphase und am Anfang der Prägephase möglich. Die neue Erfindung schlägt deshalb vor, dass während diesem Zeitabschnitt ein relevanter Prozessparamter detektiert wird, aufgrund dessen unmittelbar auf den Druckverlauf der Schmelze eingewirkt wird. Wird in der Kavität zu viel Masse eingespritzt, so hat dies bei Beginn des Prägeschrittes eine entsprechende, sofortige Drucküberhöhung zur Folge. Die Drucküberhöhung kann über entsprechende Sensoren nahezu zeitgleich detektiert werden. Ist der gemessene Druck zu hoch bzw. der Druckverlauf zu steil, wird z.B. durch noch stärkeres Erhöhen des Druckes sofort Einfluss auf die Strömug im Angussbereich genommen. Wenn einmal die Gesetzmässigkeit der entsprechenden Parameter ermittelt ist, kann mit sehr hoher Genauigkeit das Zuviel oder Zuwenig an Masse in der Kavität korrigiert werden. Als Ergebnis werden auf diese Weise Übergewichte oder Untergewichte des fertigen Datenträgers vermieden.

Da es gängige Praxis ist, die Prägung in Teilschritten zu kontrollieren, benötigt die neue Erfindung relativ wenig zusätzlichen Regelaufwand, und dies mit einem unerwartet grossem Erfolg. Es gibt mehrere Möglichkeiten, was den relevanten Prozessparameter betrifft. Beispielsweise kann über eine vorgegebene Zeit bzw. einen vorgegebenen Zeitabschnitt die Detektion vorgenommen werden, z.B. durch Wahl von Referenzpunkten. Eine höhere Genauigkeit wird erreicht, indem der ganze kritische Kurvenverlauf als Sollkurve gespeichert wird. Bei Abweichung von der Sollkurve kann zu jedem beliebigen Zeitpunkt, wie beschrieben, durch Vergleich der Sollwertkurve mit der Ist-Wertkurve eine Korrektur vorgenommen werden.

Gemäss einer bevorzugten Lösung wird mit der Detektion der Prägekraft bzw. des Prägekraftverlaufes eine Abweichung der Masse sofort erkannt und durch nahezu zeitgleiches Einleiten der notwendigen Änderung der Prägeparameter der Massefehler korrigiert. Grundsätzlich ist es jedoch auch möglich, eine Korrektur auf der Seite der Einspritzdüse vorzunehmen. Dabei wird durch eine Detektion des Druckes bzw. Druckverlaufes der Masse im Formhohlraum durch Korrektur des Einspritzdruckes und entsprechender Strömungsbeeinflussung von der Einspritzdüse in die Kavität der Spritzformen die Menge der Schmelze im Formhohlraum korrigiert.. Einfach dargestellt stellen der Formhohlraum und das Massepoister vor der Spitze der Einspritzdüse über den düsenartigen Übergang bzw. den Bereich des Angusses zwei kommunizierende Gefässe dar. Solange erstens ein Druckunterschied zwischen den zwei Räumen besteht und zweitens die Schmelze noch nicht gefroren ist, fliesst Schmelze von der Seite mit höherem Druck auf die Seite mit niedrigerem Druck. Der Gewichtsfehler wird durch Einflussnahme auf die Druckverhältnisse in den beiden Räumen korrigiert.

Das Prägen erfolgt bevorzugt geschwindigkeitsgeregelt, wobei der Gewichtsfehler durch die Einleitung einer Korrektur der Geschwindigkeit der Prägebewegung noch im ersten Abschntit des Prägeschrittes eingeleitet wird. Ganz besonders vorteilhaft ist es, wenn die ganze Prägephase geschwindigkeitsgesteuert/-geregelt wird, wobei in der ersten Prägephase die Prägekraft detektiert und durch Variation des anschliessenden Prägeverlaufes über eine Variation der Bewegung bzw. der Geschwindigkeit der beweglichen Form Gewichtsfehler korrigiert werden. Der Prägespalt kann positionsgeregelt werden, wobei ein leichter Kraftaufbau am Ende der Einspritzphase durch den Fliesswiderstand bzw. die daraus resultierende Säulendehnung korrigiert werden muss.

Auf der maschinenbaulichen Seite wurde bisher als optimale Lösung befunden, wenn die beiden Formhälften zwischen einer angetriebenen Platte und einer Gegenplatte über Säulen gehalten, mittels eines elektromechanischen Antriebes verspannt werden und die Antriebsmittel auf der Basis der Wegfunktion der angetriebenen Platte und der wirksamen Kompression bzw. der Maschinendehnung im. Sinne eines Basisprogrammes programmsteuerbar sind. Bei diesem Vorschlag werden zwei völlig unterschiedliche Parameter zu einer echten Synthese verbunden. Neben der direkt durch den Antrieb verursachten Bewegung und die durch die Kompression verursachte Maschinenverlängerung als äussere Parameter werden die inneren Parameter, insbesondere die Gewichtsmenge der eingespritzten Masse, durch eine Detektion des Druckes kontrolliert und soweit erforderlich korrigiert. Die Kompressionsfunktion (K x F) wird auf Grund der Maschinendehnung (K) sowie der wirksamen Kompressionskraft (F) ermittelt. Vorteilhafterweise erfolgt der elektromotorische Antrieb über einen Servomotor und der mechanische Übertrieb über eine Kurbel, einen Exzenter, Kniehebel oder über Zahnstangen. Wenn der mechanische Übertrieb über eine Kurbel oder einen Exzenter erfolgt und die Wegfunktion aus der Kurbel- oder Exzenterstellung ($\varphi$) abgeleitet wird, kann die Positionserkennung aus der Regelung des Servomotores ermittelt werden. Der totale Prägehub bzw. Kompressionsweg wird aus der Wegfunktion der angetriebenen Platte [f($\varphi$)] sowie der Kompressionsfunktion (K x F) ermittelt und die Antriebsmittel, zumindest während mehreren Prägeteilschritten, nach einem Geschwindigkeitsprogramm gesteuert.

## Kurze Beschreibung der Erfindung

In der Folge wird die Erfindung an Hand von einigen Beispielen mit weiteren Einzelheiten erläutert. Es zeigen:

| | |
|---|---|
| die Figur 1 | ein Schema für das Grundprinzip der neuen Lösung; |
| die Figur 2 | eine vereinfachte Darstellung für das Spritzgiessen von flachen optischen Datenträgern; |
| die Figur 3a | ein Diagramm für die relative Volumenveränderung $\Delta V/V$ 25° von unverstärktem PC in Abhängigkeit von Druck und Temperatur; |
| die Figur 3b | das spezifische Volumen in Bezug auf Temperatur und Druck (PVt-Diagramm von unverstärktem PC); |
| die Figuren 4a bis 4d | verschiedene Diagramme, dargestellt über der Zeit, Figur 4a die Lage der Form, die Figur 4b die Prägekraft, die Figur 4c den Prägespalt und die Figur 4d die Position der Einspritzschnecke; |
| die Figuren 5a und 5b | zwei Beispiele für das Korrigieren der Masse in der Form, Figur 5a auf der Prägeseite und Figur 5b auf der Einspritzseite; |
| die Figur 5c | ein Korrekturbeispiel während der Prägephase über der Zeit; |
| die Figuren 6a bis 6c | der gesteuerte Geschwindigkeitsverlauf über dem Weg, die Figur 6a für das Formschliessen, die Figur 6b für das Prägen und die Figur 6c für das Formöffnen; |
| die Figur 7a | ein Beispiel für das maschinenbauliche Grundprinzip der neuen Lösung; |
| die Figur 7b | den theoretischen Kraftverlauf am Ende der Schliessbewegung beim Aufbau der Prägekraft; |
| die Figur 7c | die Funktion von Position und Drehwinkel für den Kurbeltrieb; |
| die Figur.8a | eine Spritzgiessmaschine des Standes der Technik für die Herstellung von z.B. CDs; |
| die Figur 8b | ein vorteilhaftes, maschinenbauliches Grundkonzept der Formschliesseinheit für die neue Lösung; |
| die Figur 8c | schematisch ein Schnitt einer Drei-Säulenmaschine; |
| die Figur 9a | die Spielaufhebung einer Lösung gemäss Figuren 8a - 8c; |
| die Figur 9b | die Lagerung einer Säule in grösserem Massstab; |
| die Figur 10 | die Exzenter- bzw. Kurbelbewegung; |
| die Figur 11 | ein Kraft-Weg-Diagramm beim Prägen für die neue Lösung; |
| die Figur 12 | ein Kraft-Weg-Diagramm für das Prägen als Funktion der eingespritzten Schmelzemasse. |

## Wege und Ausführung der Erfindung

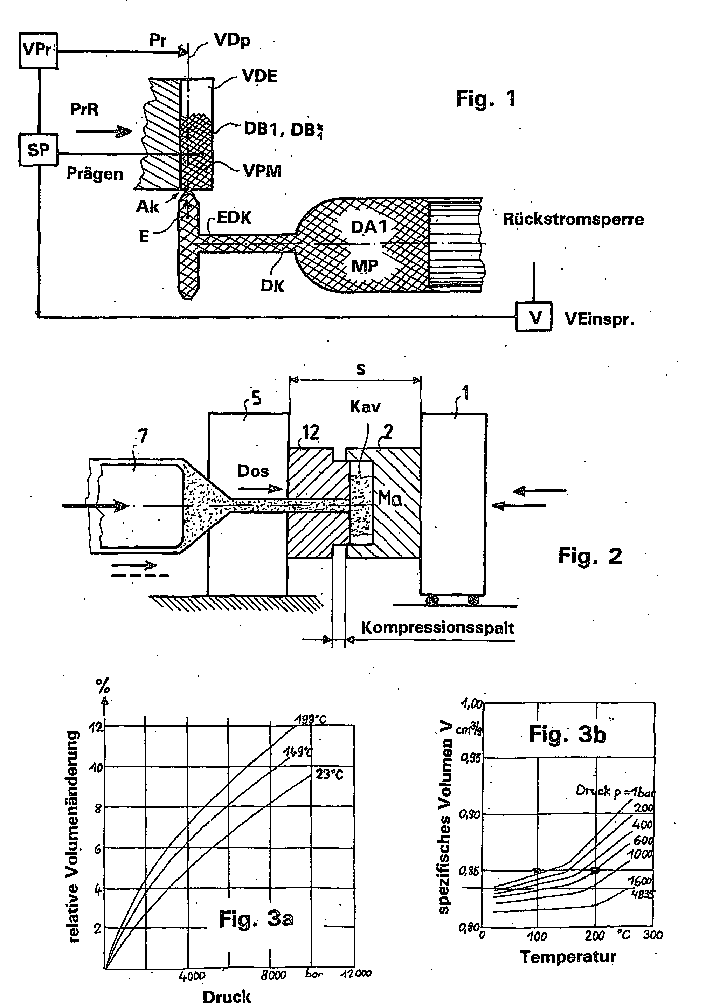

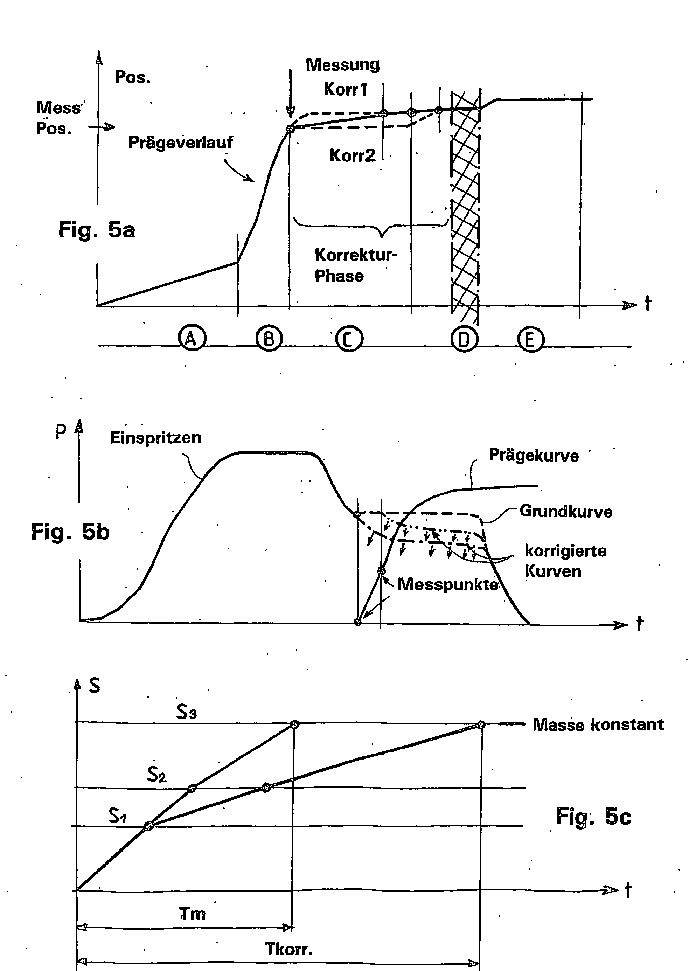

Die Figur 1 zeigt das Grundprinzip der neuen Lösung. Das Viereck $V_{DE}$ links oben stellt das Volumen der Kavitäten am Ende der Einspritzphase dar. Der Pfeil Pr zeigt die Richtung der Prägebewegung, wobei die strichpunktierte Linie $V_{DP}$ das verkleinerte Volumen am Ende der Prägephase bedeutet. Der schraffierte Teil $V_{PM}$ symbolisiert die eingespritzte Prägemasse, welche kleiner ist als das Volumen der Kavität $V_{DE}$. Der Pfeil E bedeutet die Einspritzrichtung und der Doppelpfeil $D_K$ die beiden Strömungsrichtungen für eine Korrektur der eingesprpitzten Masse. $M_P$ ist das Massepolster am Ende des Einspritzvorganges, welches durch die Rückstromsperre konstant gehalten wird. Beim Einspritzen wird die flüssige Masse durch die Linearbewegung der Einspritzschnecke über den Einspritzdüsenkanal $E_{DK}$ über den Angusskanal AK in die Kavität eingespritzt. Am Ende des Einspritzvorganges stellt sich ein bestimmter Druck $D_{B1}$ ein, der über einen Drucksensor Sp detektiert und der Regelung für die Prägebewegung als Druck-Istwert zugeführt wird.

Ist der Druck $D_{B1}$ zum Messzeitpunkt grösser als der gewünschte Druck-Sollwert, wird mit dem geringstmöglichen Zeitverzug ein Korrektursignal auf die Prägebewegung VPr gegeben, wodurch sich eine zusätzliche Druckerhöhung $D_{B1}^x$ einstellt. Wird davon ausgegangen, dass zum Messzeitpunkt $D_{B1} = D_{A1}$ (im Massepolster) ist, so stellt sich automatisch durch die korrigierte Prägebewegung (VPr) ein grösserer Druck $B_{B1}^x$ ein, welcher sofort eine Rückströmung von der Kavität in das Massepolster $M_P$ zur Folge hat. Als Alternative ist es möglich, eine sinngemässe Korrektur über die Bewegung bzw. Geschwindigkeit V der Einspritzschnecke, jeweils mit umgekehrter Bewegungsrichtung, vorzunehmen. Bei einem Zuviel an eingespritzter Masse in die Kavität wird der Druck $D_{A1}$ abgesenkt, so dass dies gleicherweise zur beschriebenen Strömungsumkehr führt und eine Gewichtskorrektur für die fertige CD zur Folge hat. In der Praxis wird durch das Aufbringen der Prägekraft Pr R in den Formkavitäten eine Drucksteigerung $DB_1^x$ erzeugt, welche ein entsprechendes Rückströmen der Masse durch den Anguss verursacht. Die neue Erfindung beeinflusst mit der Druckänderung $DB^1$, $DB_1^x$ die Rückströmgeschwindigkeit (DK) sehr gezielt.

Die Figur 2 zeigt etwas konkreter die Situation am Ende der Einspritzphase. Zumindest theoretisch ist es möglich, die dargestellte Druckkorrektur bereits am Ende der Einspritzphase bzw. Dosierphase Dos vorzunehmen. Als idealer Zeitpunkt für die Detektion des Druckes in den Formen wird der Zeitpunkt gesehen, unmittelbar nachdem durch die Prägebewegung die Schmelze die Kavitäten (Kav) vollständig ausgefüllt haben. Es ist der Zeitpunkt mit einer sehr starken Druckänderung durch die zunehmende Prägekraft auf die vollständige, eingesperrte Giessmasse (Ma). Durch die relativ hohen Drücke können schon kleine Abweichungen präzise und schnell detektiert werden, so dass schon Mengenfehler in dem Bereich von 1‰ bis 1 % korrigierbar sind.

Für die Massekorrektur wird bevorzugt der erste Abschnitt der Prägung gewählt, da diese Werte viel höher sind und deshalb mit höherer Genauigkeit Differenzen ermittelt werden können. Für die Regelung der Prägephase ist es wichtig, dass die an sich bekannte Volumenänderung der Masse (Ma) sowohl als Funktion der Temperatur wie auch des Druckes wegen der Kompressibilität der flüssigen Kunststoffmasse bei den hohen Drücken von bis zu 2000 bar berücksichtigt wird. Es wird dafür auf die an sich bekannten Figuren 3a und 3b Bezug genommen.

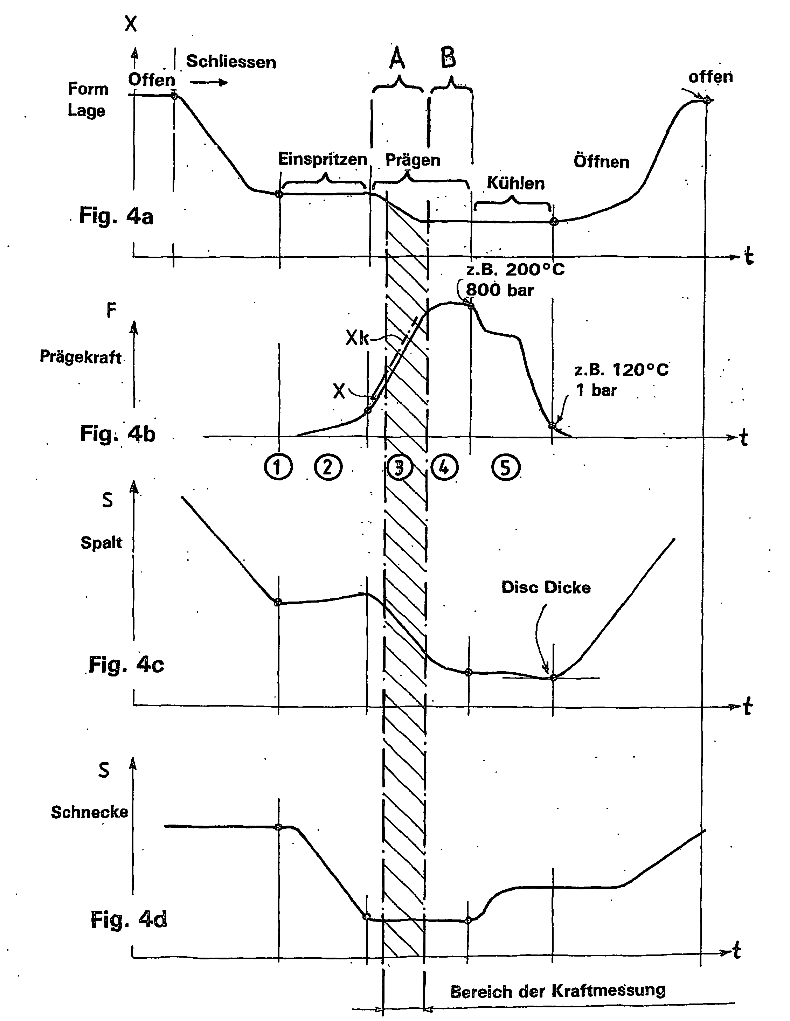

Die Figuren 4a und 4b zeigen qualitativ den Verlauf der wichtigsten Parameter die Lage der Form sowie die Prägekraft. Die Figuren 4c und 4d zeigen den Spalt sowie den Schneckenweg über dem selben Zeitmassstab. Für die Schliesskraftregelung beim Prägen gelten die folgenden Zusammenhänge: Bestimmung SK (Schliesskraft) am Prägeende: Fp. Mittelwertbildung zur Eliminierung von zufälligen Schwankungen: Fp50. Regelfehler: ΔF = FSoll Prägen - Fp50 = Temp.einfluss. Regelziel: φ = 180°

$$\frac{\Delta F}{K} = \Delta x \rightarrow \text{Korrektur an Inspekt Hub als Zentral-Verstellung}$$

In den Figuren 4a bis 4d ist zusätzlich der Grundgedanke für die Korrektur in einem ersten Abschnitt A der Prägephase markiert. Der Punkt X stellt symbolisch eine erste, realistisch mögliche Messung des Druckes bei Beginn der Prägephase dar, wobei XK sinngemäss eine Ist-Druckkurve darstellt. Am Ende des ersten Abschnittes A muss die Korrektur, eventuell eine wiederholte Korrektur, vollständig abgeschlossen sein, so dass bei Beginn des zweiten Abschnittes B nach Einfrieren des Angusses mit der exakt erforderlichen Masse die Prägephase durchgeführt werden kann. Am Ende der Prägephase hat die Schmelze zu der Kavität noch eine Temperatur von z.B. 200°C, dies bei etwa 800 bar. Am Ende der Kühlphase ist das Produkt bereits auf 120°C abgekühlt, dies bei einem bar. Der ganze Giesszyklus kann auf die folgenden sechs Punkte reduziert werden:

1) Position BFP = Produktdicke + Prägespalt (W2 verschlossen)
2) Einspritzen Masse Kühlen Kraftaufbau über Kraft der Schmelzeverteiler (Fliesswiderstand) Prägespalt positionsgeregelt (öffnet leicht über Säulendehnung)
3) Prägen:
A Kuchen verteilen: Nachdruck aufbauen → DFP weicht unter Säulendehnung aus; → Anguss noch nicht eingefroren, Masseverlust durch Rückströmung im Schneckenvorderteil, mit Prägegeschwindigkeit wird Masseverlust gesteuert.
4) Prägen:
B (nach Einfrieren des Angusses) Ausprägung des Fertigproduktes (Nachdrehersatz)
5) Kühlen: Schliesskraft wird abgesteuert, um eine Schwindung gemäss PVT-Diagramm zu ermöglichen, ohne dass interne Spannungen entstehen.
6) Form öffnen

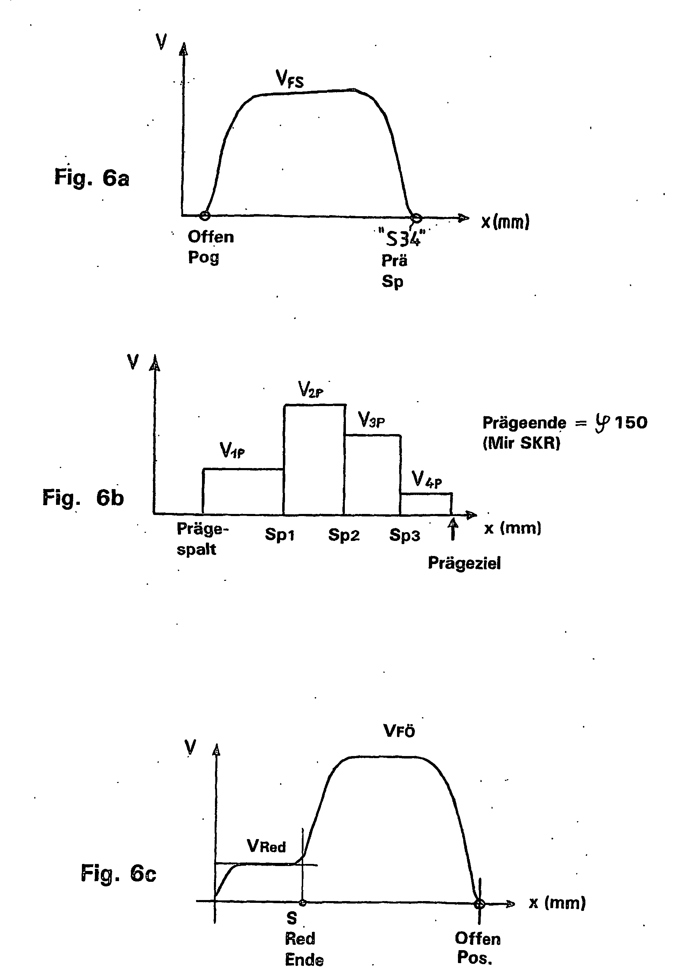

Die Figur 5a zeigt qualitativ zwei mögliche Fehlerkorrekturen während der Prägephase durch Verändern der Prägegeschwindigkeit. Die Figur 5b zeigt sinngemäss die Korrektur auf der Seite der Einspritzschnecke. Bei der Einspritzschnecke muss durch die Schneckenbewegung aktiv auf die Rückstromsperre Einfluss genommen werden für eine gewünschte Druckkorrektur. Die Figur 5a zeigt den qualitativen Verlauf für zwei Korrekturbeispiele für die Korrektur von Mengenfehlern:
Mit A ist die Phase der Dosierung der Schmelze in den Formhohlraum bezeichnet. Man spricht dabei von einer Verteilung des Kuchens. Am Ende des Dosiervorganges ist die Formkavität nur teilweise gefüllt.

Mit B ist der eigentliche Druckanstieg der einsetzenden Prägung bezeichnet. Der erste Teil der Prägung ist gekennzeichnet durch einen relativ grossen Weg, weil durch den Prägestempel der Kuchen den sich laufend verkleinernden Formhohlraum zuerst vollständig füllen muss. Bei dem Pfeil, mit Messung bezeichnet, ist die Form bereits vollständig gefüllt. Es beginnt der eigentliche Prägedruck bzw. die Kompression der Schmelze beim Übergang von B zu C. Dies ist genau der Zeitpunkt für eine erste Detektion einer Messung des Druckes in der Form. Der Druck in der Kavität steigt an sich an. Gleichzeitig beginnt jedoch durch die weitere Druckerhöhung in der Form ein Rückströmen von Schmelze durch den Anguss in das sich vor der Einspritzschnecke befindende Produktpolster. Genau dieser Sachverhalt nutzt die neue Erfindung, in dem vorzugsweise in der Phase der grössten Druckwerte bei vollständig gefüllter Kavität in der Form der Druck der Schmelze direkt oder indirekt detektiert wird. Dies erfolgt bei einer definierten Messposition, sei es zeitlich oder als definierte Wegposition.

Bei C wird das Ergebnis der Messung bzw. Detektion aus entsprechenden Soll-Ist-Vergleichen bzw. aus Vergleichen mit früher ermittelten Optimalwerten mit den Ist-Werten zur sofortigen Einleitung einer Korrektur der Prägebewegung genutzt. Das Rückströmen der noch flüssigen Schmelze wird im beschleunigenden oder verzögernden Sinne durch die entsprechend eingeleiteten Druckverlaufsänderungen kontrolliert beeinflusst, so dass am Ende die fertige Form das gewünschte Sollgewicht aufweist. Es kann durch ein Mehr- oder Weniger-Rückströmen im Bereich von Promillen oder im Extremfall einiger Prozente der Mengenfehler korrigiert werden. Die beiden strichlierten Linien Korr 1 und Korr 2 zeigen qualitativ zwei Korrekturbeispiele.

Mit D ist das Einfrieren der Schmelze im Anguss markiert. Dies bedeutet, dass vor der Phase D die Korrektur des Mengenfehlers abgeschlossen sein muss. Mit E ist das vollständige Ausprägen bezeichnet. Dabei findet durch die flächige Prägekraft eine exakte Oberflächenausprägung statt, bzw. es wird bis zur höchsten Qualität die Oberflächenstruktur für die Einprägung der Information hergestellt. Die neue Lösung hat den grossen Vorteil, dass auch die Oberflächenstruktur mit einer zusätzlichen, optimal definierten Schmelzemenge erzeugt wird. Damit wurde ein bisher dem Zufall überlassener Faktor mit einem kontrollierten Verfahren optimiert.

Die Figur 5c zeigt mit zwei vereinfachten Beispielen die Funktion des Weges über der Zeit für die Prägephase. In beiden Fällen soll als Ziel der identische Weg S erreicht werden. Im Falle von Tm wird durch eine höhere Geschwindigkeit der Prägebewegung in kurzer Zeit Tm erreicht, im Vergleich zum zweiten Fall Tkorr. Das Ziel ist, in beiden Fällen eine absolut konstante Masse für das fertige Produkt zu erreichen.

Die Figuren 6a bis 6c zeigen die Möglichkeit einer vollständigen Geschwindigkeitsregelung für den gesamten Zyklus, wobei die Figur 6a das Schliessen der Form, die Figur 6b das Prägen und die Figur 6c das Formöffnen darstellen. Es bedeuten VFs = Geschwindigkeit beim Formschliessen; Pos offen, die offene Position der Form; PräSp der Prägespalt in mm; $V_1P$ sowie $Sp_1$ die Geschwindigkeit sowie die entsprechende Position 1, 2, 3 etc. der beweglichen Form; Vred eine reduzierte Geschwindigkeit sowie Fö die Formöffnungsgeschwindigkeit.

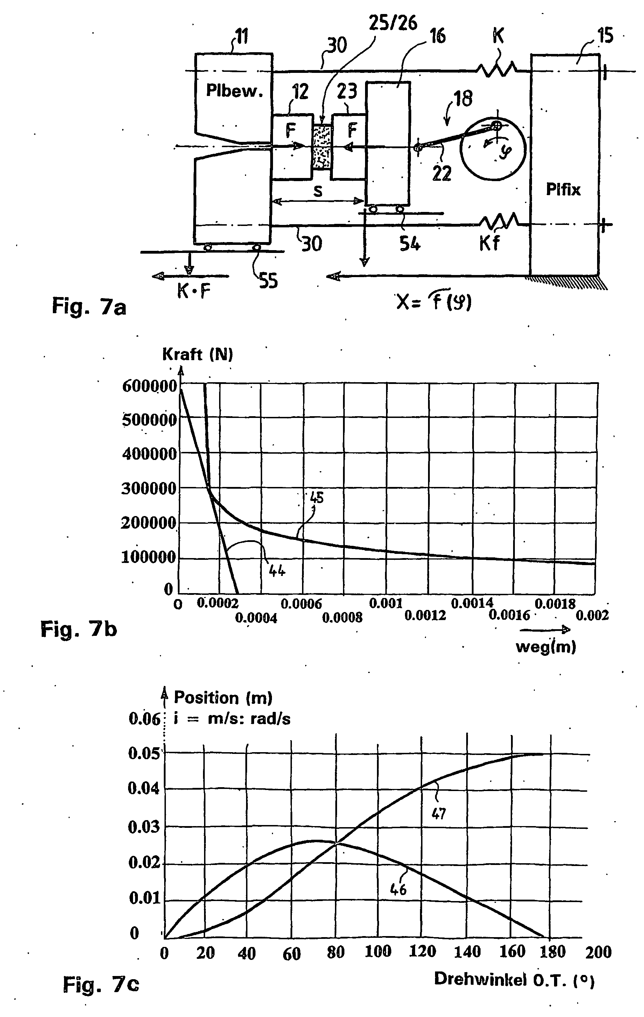

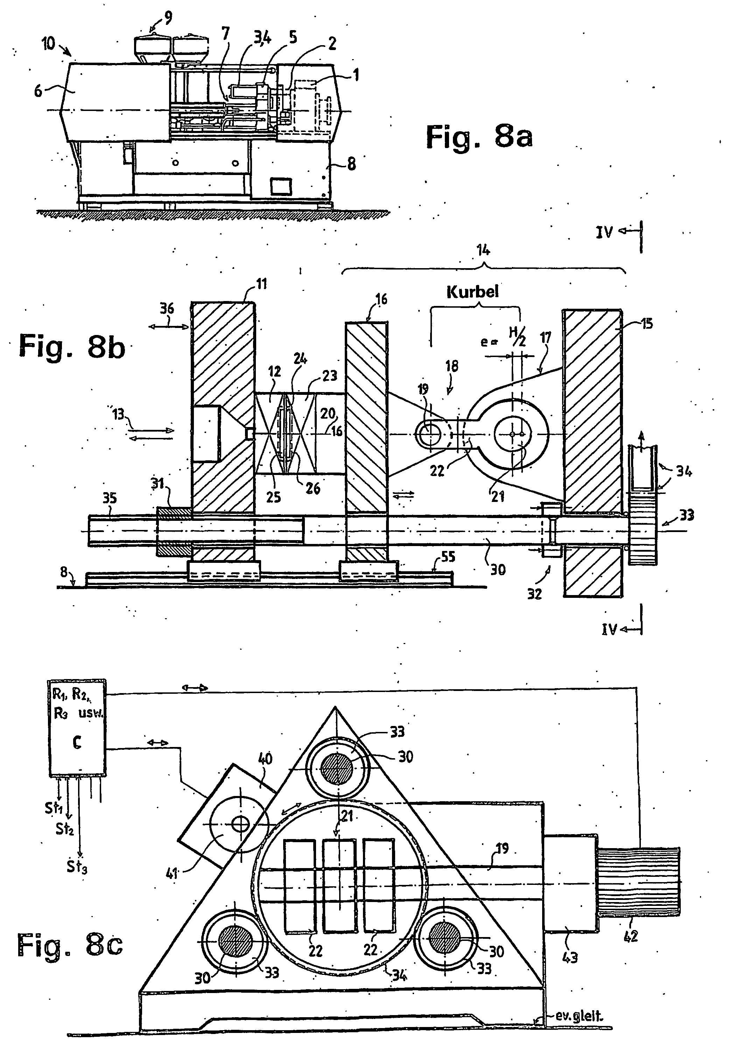

Die Figur 7a zeigt entsprechend Figur 8b ein Grundschema mit den maschinenbaulichen Kernelementen. Dabei bedeutet $K_f$ die Federkonstante der Säule 30, gegebenenfalls mit Einschluss der übrigen deformierbaren Bauteile, soweit die resultierende Deformation unter einer entsprechenden Belastung die Distanz S zwischen den Werkzeugaufspannplatten 11 und 16 beeinflusst. Die Antriebsträgerplatte 15 ist mit PLfix bezeichnet. In diesem Baukonzept ist die Antriebsträgerplatte starr bzw. fix auf dem Maschinenständer. Beim Kurbeltrieb 18 ist mit φ der Drehwinkel angegeben.

In der Figur 7b ist mit der ausgezogenen Linie 45 der theoretische Kraftverlauf am Ende der Schliessbewegung dargestellt. Die dicke Linie 44 zeigt den effektiven Kraftverlauf auf beide Formhälften auf Grund der hook'schen Kennlinien der Verformung der Säulen sowie der Platten, bei einer CD-Schliesseinheit mit 50mm Öffnungsweg. In Figur 7c zeigt die untere Linie 46 den Geschwindigkeitsverlauf und die Kurve 47 den Verlauf der Exzenterbewegung für einen CD-Formschluss.

Mit der bekannten Lösung gemäss Figur 8a wird im Stand der Technik eine CD in 3,7 Sekunden oder weniger hergestellt. Es handelt sich um eine Lösung der Anmelderin. Es ist eine vollhydraulische Maschine 10 mit sehr guten Eigenschaften in Bezug auf die Maschinenstabilität und weist drei Säulen sowie die Möglichkeit für einen Kurzsowie einen Langhub auf. Der Kurzhub liegt bei 70 bis 80 mm, und die Schliesskraft ist bei etwa 600 kN. Der Wartungshub liegt bei etwa total 300 mm. Eine Formplatte 1 ist fest mit einem Maschinenständer 8 verbunden. Die Zugstangen 2 sind verschraubt mit der Formplatte 1, wobei am anderen Ende der Zugstangen 2 ein Kolbenkopf 3 sich innerhalb eines Zylinders 4 befindet. Die Formplatte 5 ist in einer Produktionsstellung gezeichnet, wobei der Kolbenkopf 3 dauernd gegen eine Schulter der Zugstangen 2 drückt. Mit relativ geringen Kräften bewegt sich über zwei Hilfszylinder ein Schliesskolben vor- und rückwärts über den ganzen Kurzhub. Nur für das Aufbringen der grossen Schliesskraft wird der entsprechende Oeldruck in einer Kolbenkammer aufgebracht. Für das. Wechseln eines Stampers in der Form werden die drei Zylinder an den Zugstangen angesteuert, und die Formplatte 5 öffnet sich um den Wartungshub. Die Maschine 10 ist mit geöffneter Schutztüre 6, mit Sicht auf den Formschluss und den Einspritzzylinder 7, dargestellt. Das Rohmaterial wird über Füllbehälter 9 der Maschine zugeführt, über den Einspritzzylinder erwärmt und unter Druck in die Kavitäten der Formen gespritzt.

Die Figur 8b zeigt bildlich das Grundkonzept für die Herstellung von flachen Datenträgern, wie etwa Kompaktdisks, beim Übergang von der Einspritzphase in die Prägephase. Im Zentrum ist eine Kavität Kav, welche letztlich die äussere Form des Datenträgers bestimmt. Im Laufe der Entwicklung des Produktionsprozesses wurden verschiedene Konzepte verfolgt. Unveränderte Gültigkeit hat die Tatsache, dass für die höchsten Anforderungen eine Menge der Spritzmasse dosiert in die Kavität gepresst wird, jedoch nur soviel, dass die Kavität nur teilweise gefüllt wird. Vorgängig der Füllung wird durch Bewegen der Formplatte 1 oder der Formplatte 5 ein vorbestimmter Kompressionsspalt gebildet. Die Menge der Spritzmasse ist mit Ma bezeichnet. Nach Abschluss der Formfüllphase bzw. des Einspritzvorganges wird der eigentliche Prägevorgang eingeleitet. Beim Beispiel gemäss Figur 8c wird dafür die Formplatte 1 in Richtung der Kavität bewegt und unter Aufbringen einer maximalen Kraft der Formhohlraum bzw. die Kavität verkteinert und die Masse verdichtet. In älteren Verfahren wurde dafür der Kompressionsspalt bis auf 0 aufgehoben. In der neuen Lösung ist erkannt worden, dass die Werkzeuge nicht auf Anschlag gefahren werden dürfen, dass vielmehr ein Restspalt für eine exakte Endregelung, auch nach Abschluss der Prägung, verbleiben soll. Die Figur 8c zeigt ein an sich bekanntes Baukonzpet für die Formbewegung. Die Voreinstellung des Kompressionsspaltes wird elektromotorisch durch Bewegen der Formplatte 1 erzielt. Nach Abschluss der Dosierung wird über Oeldruck die für das Prägen erforderliche Kraft erzeugt. Dabei handelt es sich um eine Hybridlösung mit allen Vorteilen und Nachteilen der zwei Antriebsmittel.

Die Figur 8b zeigt ein Beispiel der neuen Lösung. Auf der linken Bildseite der Figur 8b ist die düsenseitige Werkzeugaufspannplatte bzw. Langhubträgerplatte 11 mit einer Formhälfte 12 dargestellt, auf die hin, gemäss Pfeilen 13, die Einspritzdüse 7 zu- und wegbewegt wird. Die Langhubträgerplatte 11 kann, je nach gewähltem Konzept, fest oder beweglich an dem Maschinenständer 8 angeordnet werden. Auf der rechten Bildseite befindet sich als eine bevorzugte Lösung eine kompakte Baueinheit 14 mit einem Kurbelantrieb. Die Baueinheit 14 besteht aus einer Antriebsträgerplatte 15 und einer beweglichen Werkzeugaufspannplatte 16, die auf einer Führung 20 auf dem Maschinenbett 8 aufliegt, sowie einer Kurbelträgerkonstruktion 17. Ein Kürbeltrieb 18 ist einerseits über einen Bolzen 19 in der beweglichen Werkzeugaufspannplatte 16 und andererseits über einen Exzenter 21 in der Kurbeltragkonstruktion 17 gelenkig gelagert, derart, dass die Kurbel 22, entsprechend der Exzentrizität e, die Kurbelbewegung ausführen kann. Die Exzentrizität e entspricht der halben Hubhöhe (H/2). Auf der gegenüberliegenden Seite der beweglichen Werkzeugaufspannplatte 16 befindet sich die eine Formhälfte 23. Mit den beiden Formhälften 12 sowie 23 entsteht in geschlossenem Zustand der Hohlraum 24 für die Einlage des gewünschten scheibenförmigen Formteiles. Üblicherweise wird die CD nicht direkt in den Hohlraum 24 gegossen. In den Hohlraum wird ein- oder beidseitig je ein Stamper 25, 26 eingelegt, welcher als Negativform die Kavität für den herzustellenden flachen Datenträger aufweist. Die Verankerungs- und Haltekraft zwischen den beiden Platten wird durch drei oder gegebenenfalls vier Säulen 30 sichergestellt. Jede Säule 30 ist auf der düsenseitigen Werkzeugaufspannplatte 11 über eine Mutter 31 verankert. An der Antriebsträgerplatte 15 ist ein drehbeweglicher Bund 32 befestigt, welcher über einen Zahnkranz 33 in einen Zahnreifen 34 eingreift. Die feste Mutter 31 greift über ein Innengewinde auf den Gewindelauf 35 jeder Säule ein. Eine Drehbewegung des Zahnkranzes oder des Zahnriemens wird durch die Drehung der Säulen auf die Mutter 31 und den Gewindelauf 35 der Säulen in eine Linearbewegung (Pfeile 36) der düsenseitigen Werkzeugaufspannplatte 11 umgesetzt. Diese Bewegung stellt den Lang- oder Wartungshub dar und wird primär beim Stamperschnellwechsel benötigt. Der kurze Arbeitshub wird dagegen über den Kurbeltrieb 18 sowie die bewegliche Werkzeugaufspannplatte 16 durchgeführt. Die Figur 8c zeigt schematisch den An- bzw. Übertrieb für die Säulenmuttern bzw. den Langhub mit einem Elektromotor 40 mit Antriebsritzel 41 sowie den Antrieb für den Kurzhub über einen Elektromotor 42, ejn Getriebe 43 und den Exzenter 21. Die Einspritzeinheit mit Plastifizierzylinder sind der düsenseitigen Werkzeugaufspannplatte 11 und beide elektromotorischen Antriebe der anderen, festen Trägerplatte zugeordnet. Der Wartungshub wird mit einer an sich bekannten "Formbauhöhenverstellung" mittels Radkranz und Zahnrädern an den Säulenmuttern gefahren. Als Alternative kann die Drehung der Säulen mit einem Zahnriemen realisiert werden. Mit der Lagerung der Säulen mit Wälzlagern in den Formplatten und mit der Schmierung der Lager und der Verstellgewinde lassen sich höhere Verstellgeschwindigkeiten und damit Umrüstungszeiten beim Wechsel der Matrize (Stamper) von kleiner als 30 Sekunden erreichen. Neu wird deshalb auch für diesen Antrieb ein Motor mit genau positionierbarer Achse, vorzugsweise ein Servomotor mit spielarmem Getriebe, eingesetzt. Zwischen Kurbeltrieb und elektrischem Antriebsmotor befindet sich ein Getriebe, vorzugsweise ein Stirnradgetriebe. Mit C ist eine Steuer-/Regelintelligenz mit Speicher angedeutet, welche der entsprechenden Motorsteuerung/Regelung die jeweils erforderlichen Programmabläufe bzw. Rezepte vorgibt. Im Kasten C ist mit R1, R2, R3, usw. angedeutet, dass beliebige Rechenleistungen direkt vor Ort installiert und entsprechende Koordinationen direkt durchgeführt werden können. Sinngemäss können die Steuerverbindungen St1, St2, St3 vorgesehen und eine entsprechende Optimierung aller Steuer- und Regelabläufe sichergestellt werden.

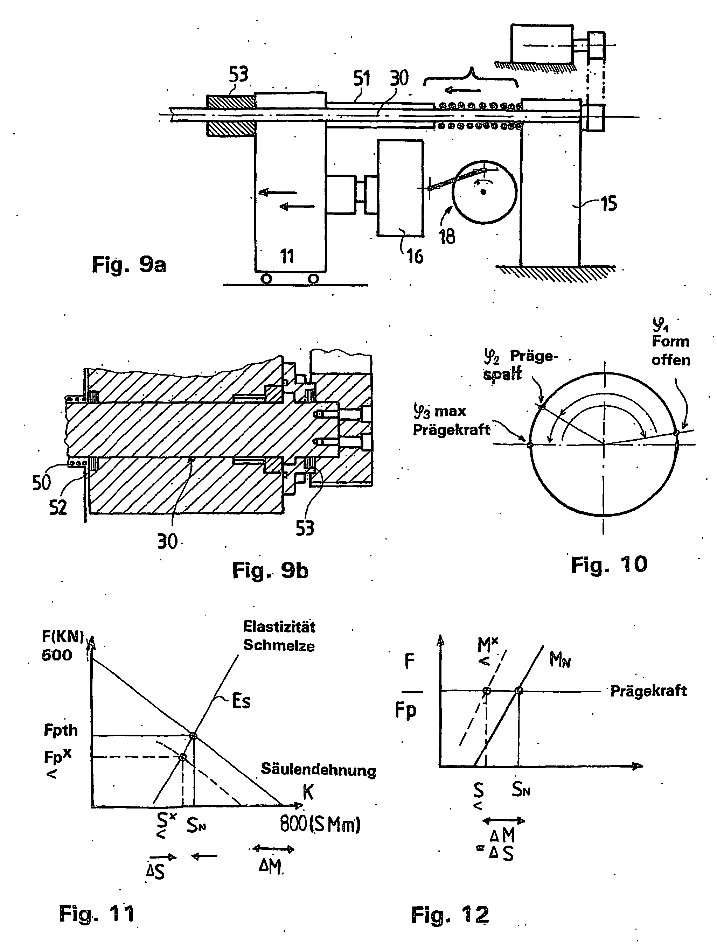

Die Figur 9a zeigt einen weiteren vorteilhaften Ausgestaltungsgedanken für die Verbesserung der Regelgenauigkeit. Für dieses Ziel wird das mechanische Spiel aller entsprechend wirksamen mechanisch bewegbaren Teile durch eine Vorspannfeder 50 aufgehoben. Wichtig dabei ist, dass die Vorspannfeder in die selbe Richtung wirkt wie der Kraftaufbau für die Prägung. Die Figur 9b zeigt einen Schnitt durch eine Lagerstelle 51 einer Säulenachse 56. An den beiden äusseren Seiten ist je eine Dichtung 52 bzw. 53 angebracht. Dies gestattet, im Inneren der Lagerung eine Fettschmierung einzuschliessen, so dass auch hier die Forderung einer langen Lebensdauer sowie der Reinraumeinsatz sichergestellt sind.

Das optimale Regelziel liegt innerhalb von etwa 180°, wie aus der Figur 10 erkennbar ist. In der Figur 10 sind drei unterschiedliche Lagen dargestellt: Beim Drehwinkel φ1 ist die Form offen; Drehwinkel φ2 stellt den Prägespalt und φ3 die Stellung bei der maximalen Prägekraft dar. Bei der maximalen Prägekraft kann die Kurbel in der Totpunktlage oder aber in Totpunktnähe sein. F bedeutet die wirksame Kraft auf die deformierbaren Teile der Maschine, insbesondere auf die Säulen 30. Die Werkzeugaufspannplatte 16 ist symbolisch auf Rollen 54 und die Werkzeugaufspannplatte auf Rollen 55 gelagert (Figur 7a). Damit soll deutlich gemacht werden, dass beide Werkzeugaufspannplatten 11 und 16 senkrecht in Bezug auf die Antriebsträgerplatte 15 verschiebbar und damit relativ zueinander bewegbar sind. Als Konsequenz aus den Relativbewegungen der beiden Formhälfen 12 und 23 ergibt sich eine direkte Änderung des Distanzmasses S, je nach örtlicher Lage der beiden Werkzeugaufspannplatten 11 und 16. Sinngemäss ist die Werkzeugaufspannplatte 11 mit PI bezeichnet. Die Werkzeugaufspannplatte 11 bewegt sich mit der Funktion K • F und die Werkzeugaufspannplatte 16 mit der Funktion X = f (φ). Für das Distanzmass S ergibt sich die folgende Funktion:

$$S = X + K \cdot F = f(\varphi) + K \cdot F$$

Die Figur 11 zeigt schematisch die Funktion der Kraft (in KN) über dem Distanzmass S(Mm), mit den weiteren Parametern die Elastizität der Schmelze ES. Wenn die Bewegung auf einer Geschwindigkeitsfunktion gesteuert wird, wirkt sich die Elastizität der Schmelze direkt als Massereduktion aus, was mit ΔM bezeichnet ist. Dementsprechend ist die Kraft Fp$^x$ tatsächlich kleiner als die theoretische Kraft Fpth. Sinngemäss ergibt sich ein verkleinertes Distanzmass S$^x$ gegenüber dem theoretischen Mass SN bzw. ein ΔS.

Die Figur 12 zeigt auf, dass bei konstanter Prägekraft Fp ein zu wenig an Masse sich letztlich als ΔS auswirkt. Als zur Zeit beste Lösung kann die neue Lösung bei der Gattung von Spritzgiessmaschinen angewendet werden, wie sie in der WO00/47389 der Anmelderin beschrieben ist. Es handelt sich um eine Maschine mit einem sogenannten Lang- und einem Kurzhub.

Die neue Lösung geht von zwei grundlegenden maschinenbaulichen Sachverhalten aus:

1. Bei einer konkreten Spritzgiessmaschine werden die Kompressionskräfte über Säulen gehalten. Bei den enormen Kräften, die für das Prägen notwendig sind, ergibt sich eine Maschinendehnung in der Grössenordnung von 0,1 mm bis zu 1 mm und mehr. Die Dicke von Datenträgern liegt beispielsweise bei 0,4 bis 0,8 mm. Bei Anwendung der höchsten Kräfte während dem Prägeschritt auf die bewegliche erste Formhälfte flieht die zweite Formhälfte um das Mass der Maschinendehnung, das grösser sein kann als die Dicke des Datenträgers.

2. Bei einem elektromechanischen Antrieb kann zwar sowohl der Weg wie auch eine Kraft exakt ermittelt werden. Keine der beiden Grössen (Kraft oder Weg) geben aber für sich ein wahres Bild von der Grösse des Spaltes zwischen den beiden Platinen bzw. von den wirklichen Verhältnissen, insbesondere für das Prägen der flachen Datenträger.

Vom Erfinder ist erkannt worden, dass als eigentlich kritische "äussere Grössen" im Falle eines elektromechanischen Antriebes die beiden Parameter:

- Wegfunktion und
- wirksame Kompression

zusammen im Vordergrund stehen. Die Wegfunktion deshalb, weil diese auch über die Mechanik abgebildet wird, und die wirksame Kompression, weil diese in einem direkten Verhältnis steht zur konkreten Maschine, insbesondere zur Dehnung der Säule. Erst die beiden Parameter zusammen geben Auskunft über die tatsächlichen Verhältnisse in beiden Platinen, sobald eine Kompressionskraft aufgebaut wird. Die neue Lösung gestattet damit, alle Teilparameter, welche Einfluss auf die Abstandsverhältnisse haben, direkt zu berücksichtigen. Im Hinblick auf die Kompression sind dies zuerst alle möglichen Deformationen, mit Einschluss der Säulendehnung. Die Wegfunktion schliesst die speziellen, konkreten Antriebsmittel ein. Wenn zusätzlich ein Temperaturfaktor miteinfliesst, kann die Steuerung/Regelung mit den wirklichen Verhältnissen in den Formkavitäten mit höchster Genauigkeit arbeiten, so dass die Forderung der Reproduzierbarkeit, soweit diese durch maschinenbauliche Elemente beeinflussbar ist, erfüllt wird. Dies gilt ganz besonders bei den klassischen Spritzgiessmaschinenkonzepten mit relativ langen Säulen.

Als zur Zeit beste Erfindung kann die neue Lösung bei der Gattung von Spritzgiessmaschinen angewendet werden, wie sie in der WO00/47389 der Anmelderin beschrieben ist. Es handelt sich um eine Maschine mit einem sogenannten Lang- und einem Kurzhub. Beide Bewegungen werden über einen elektromotorischen Antrieb sichergestellt. Das Konzept sieht vor, dass die Antriebsträgerplatte ortsfest mit dem Ständer verbunden ist, wohingegen die beiden Formhälften relativ zueinander und zum Maschinenständer verschiebbar gelagert sind. Die Kompressionsfunktion (K x F) wird zumindest primär aufgrund der Säulendehnung (K) sowie der wirksamen Kompressionskraft (F) ermittelt. Mit der Säulendehnung bzw. dem Faktor K können alle übrigen Verformungsfaktoren, z.B. der verschiedenen Platten, miterfasst werden. Die Kompressionskraft kann auf verschiedenste Weise ermittelt und z.B. in erster Näherung aus dem Drehmoment des Antriebsmotores abgeleitet werden. Nachteilig ist dabei, dass Reibfaktoren, genau so wie Beschleunigungskräfte das Ergebnis verfälschen. Bevorzugt werden geeignete Drucksensoren aus dem Bereich der Formen oder aber Sensoren für die Dehnung der Säulen zur Ermittlung der wirksamen Kompression zugrunde gelegt. Im Falle der Messung der Säutendehnung reduziert sich die Steuerung/Regelung beim Fehlen einer Kompression vor allem auf die Wegfunktion, da in diesem Fall die wirksame Kompression gleich Null ist. Besonders bevorzugt erfolgt der elektromotorische Antrieb über einen Servomotor und der mechanische Übertrieb über eine Kurbel oder einen Exzenter. Dabei kann die Wegfunktion aus der Stellung der Kurbel- oder des Exzenters ($\varphi$) abgeleitet und entsprechend der Positionserkennung aus der Regelung des Servomotores ermittelt werden. Die realen Verhältnisse in den Kavitäten der Formen lassen sich aus der Wegfunktion der angetriebenen Platte [$f(\varphi)$] sowie der Kompressionsfunktion (K x F) mit höchster Genauigkeit ermitteln, so dass die Antriebsmittel über mehrere Prägeteilschritte nach einem vorgegebenen Geschwindigkeitsprogramm optimal gesteuert werden können. Der Kurbel- bzw. Exzenterantrieb hat nicht nur den enormen Vorteil, dass in Totpunkt-nähe eine maximale Anpresskraft erzeugt werden kann, sondern auch, dass die Bewegungsfunktion aus der Umsetzung einer Kreisbewegung in eine Linearbewegung geometrisch mit höchster Genauigkeit definierbar und aus der Positionsstellung im Servomotor herleitbar ist. Sinngemäss kann jedoch auch ein Kniehebel oder eine Zahnstange sowie eine Kombination beider sehr vorteilhaft eingesetzt werden.

Gemäss der bevorzugten Lösung wird der Exzenter- oder Kurbelantrieb einerseits auf der fixen Antriebsträgerplatte abgestützt und ist anderseits mit der angetriebenen Platte verbunden. Der Exzenter- bzw. Kurbelantrieb wird derart ausgelegt, dass der Prägehub für die maximale Kompression in Totpunktnähe nutzbar ist, wobei bevorzugt bei maximaler Kompression ein Restspalt (S) zwischen den beiden Formhälften verbleibt. Der elektromechanische Antrieb weist einen Servomotor mit Positionserkennung für die angetriebene Platte auf, wobei bevorzugt wenigstens einzelne Prägeschritte über ein Geschwindigkeitsprogramm steuerbar sind.

## Patentansprüche

1. Verfahren zum Spritzgiessen von gewichtsgenauen, flachen optischen Datenträgern, wobei in einer ersten Phase eine dosierte Menge Schmelze über einen Massepolster (MP) und eine Einspritzdüse (7) in einen vorgegebenen, von zwei Formhälften (12, 23) gebildeten Formhohlraum (24) eingespritzt und anschliessend auf die noch flüssige Schmelze in einer Prägephase ein Prägedruck aufgebracht wird, wobei die Prägephase einen ersten Abschnitt vor dem Einfrieren des Angusses aufweist,
   **dadurch gekennzeichnet,**
   **dass** am Ende der Einspritzphase oder im ersten Abschnitt der Prägephase bei noch flüssiger Schmelze wenigstens ein relevanter Prozessparameter insbesondere des Druckes bzw. des Druckverlaufes und/oder der Prägekraft bzw. des Prägekraftverlaufes und/oder des Weges und/oder der Zeit detektiert und ein allfälliger Mengenfehler der Schmelze im Formhohlraum (24) im ersten Abschnitt der Prägephase, vor Einfrieren des Angusses, durch Beeinflussung der Strömungsverhältnisse der Schmelze zwischen dem Formhohlraum (24) und dem Massepolster (MP) vor der Einspritzdüse (7) korrigiert wird.

2. Verfahren nach Anspruch 1,
   **dadurch gekennzeichnet,**
   **dass** der Mengenfehler durch Ändern des Druckes bzw. des Druckverlaufes in dem Formhohlraum (24) korrigiert wird.

3. Verfahren nach Anspruch 1 oder 2,
   **dadurch gekennzeichnet,**
   **dass** durch eine Detektion der Prägekraft bzw. des Prägekraftverlaufes in definierter Position bzw. definierter Zeit ein Mengenfehler erkannt und durch Ändern der Prägeparameter der Mengenfehler korrigiert wird.

4. Verfahren nach Anspruch 1 bis 3,
   **dadurch gekennzeichnet,**
   **dass** durch eine Detektion des Druckes bzw. Druckverlaufes der Masse in dem Formhohlraum (24) durch Korrektur des Einspritzdruckes und entsprechender Strömungsbeeinflussung im Massepolster vor der Einspritzdüse (7) die Menge der Schmelze in dem Formhohlraum (24) korrigiert wird.

5. Verfahren nach einem der Ansprüche 1 bis 4,
   **dadurch gekennzeichnet,**

**dass** der erste Abschnitt der Prägephase geschwindigkeitsgeregelt erfolgt und der Gewichtsfehler durch die Einleitung einer Korrektur der Geschwindigkeit der Prägebewegung noch im ersten Abschnitt der Prägephase eingeleitet wird.

6. Verfahren nach einem der Ansprüche 1 bis 5,
   **dadurch gekennzeichnet,**
   **dass** die ganze Prägephase geschwindigkeitsgesteuert/geregelt wird, wobei im ersten Abschnitt der Prägephase die Prägekraft bzw. der Prägekraftverlauf detektiert und durch Variation des anschliessenden Prägeverlaufes auf Grund eines Soll-Ist-Vergleiches über eine Variation der Geschwindigkeit ein Gewichtsfehler korrigiert wird.

7. Verfahren nach einem der Ansprüche 1 bis 6,
   **dadurch gekennzeichnet,**
   **dass** der Prägespalt positionsgeregelt wird und entsprechend dem Prägekraftaufbau die Säulendehnung als Korrektur berücksichtigt wird.

8. Verfahren nach einem der Ansprüche 1 bis 7,
   **dadurch gekennzeichnet,**
   **dass** die beiden Formhälften (12, 23) zwischen einer angetriebenen Platte (16) und einer Gegenplatte (5) über Säulen (30) gehalten und mittels eines elektromechanischen Antriebes verspannt werden, und die Antriebsmittel auf der Basis der Wegfunktion der angetriebenen Platte (16) und der wirksamen Kompression im Sinne eines Basis-programmes programmsteuerbar sind.

9. Verfahren nach Anspruch 8,
   **dadurch gekennzeichnet,**
   **dass** die Kompressionsfunktion (K x F) auf Grund der Maschinendehnung (K) sowie der wirksamen Kompressionskraft (F) ermittelt wird.

10. Verfahren nach Anspruch 8 oder 9,
    **dadurch gekennzeichnet,**
    **dass** der elektromotorische Antrieb über einen Servomotor und der mechanische Übertrieb über eine Kurbel, einen Exzenter, Kniehebel oder über Zahnstangen erfolgt.

11. Verfahren nach Anspruch 8 bis 10,
    **dadurch gekennzeichnet,**
    **dass** der mechanische Übertrieb über eine Kurbel oder einen Exzenter erfolgt und die Wegfunktion aus der Kurbel- oder Exzenterstellung ($\varphi$) abgeleitet und entsprechend der Positionserkennung aus der Regelung des Servomotores ermittelt wird.

12. Verfahren nach Anspruch 8 bis 11,
    **dadurch gekennzeichnet,**
    **dass** der totale Prägehub bzw. Kompressionsweg aus der Wegfunktion der angetriebenen Platte [f($\varphi$)] sowie der Kompressionsfunktion (K x F) ermittelt und die Antriebsmittel zumindest während mehreren Prägeteilschritten nach einem Geschwindigkeitsprogramm gesteuert werden.

13. Antriebs- und Steuereinrichtung für Spritzgiessformen (12, 23) einer Spritzgiessmaschine (10) mit steuer-/regelbarer Einspritz- und Prägephase, insbesondere für die Herstellung von flachen Datenträgern, wobei die Spritzgiessformen in geschlossene Position einen Formhohlraum (24) bilden in den eine Einspritzdüse (7) mündet, und wobei eine Vorrichtung zur Formung eines Massepolsters (MP) vorgesehen ist, und wobei die Steuereinrichtung wenigstens Detektor für die Erfassung wenigstens eines relevanten Prozessparameters für den Prägeverlauf aufweist, und wobei die Prägephase einen ersten Abschnitt vor dem Einfrieren des Angusses aufweist,
    **dadurch gekennzeichnet,**
    **dass** die Steuereinrichtung derart ausgelegt ist, dass ein allfälliger Mengenfehler der Schmelze im Formhohlraum (24) am Ende der Einspritzphase oder im ersten Abschnitt der Prägephase detektiert wird und im ersten Abschritt der Prägephase vor Einfrieren des Angusses durch Beeinflussung der Strömungsverhältnisse der Schmelze zwischen dem Formhohlraum und dem Massepolster vor der Einspritzdüse korrigiert wird.

14. Antriebs- und Steuereinrichtung nach Anspruch 13,
    **dadurch gekennzeichnet,**

**dass** ein elektromechanischer Antrieb sowie eine Basisprogrammsteuerung vorgesehen sind, über welche zumindest einzelne Prägeteilschritte aufgrund der Wegfunktion einer angetriebenen Platte (16) und der wirksamen Kompression bzw. der entsprechenden Maschinendehnung steuerbar ist.

**15.** Antriebs- und Steuereinrichtung nach einem der Ansprüche 13 oder 14,
**dadurch gekennzeichnet,**
**dass** sie einen Kniehebel-Zahnstangen-, Exzenter- oder Kurbelantrieb aufweist, der einerseits auf der fixen Platte abgestützt und anderseits mit der angetriebenen Platte verbunden ist, wobei im Falle eines Exzenter- oder Kurbelantriebes dieser derart ausgelegt ist, dass der Prägehub für die maximale Kompression in Totpunktnähe nutzbar ist.

**16.** Antriebs- und Steuereinrichtung nach einem der Ansprüche 13 bis 15,
**dadurch gekennzeichnet,**
**dass** der elektromechanische Antrieb einen Servomotor aufweist mit Positionserkennung für die angetriebene Platte, wobei die einzelnen Prägeschritte über ein Geschwindigkeitsprogramm steuerbar sind.

## Claims

**1.** Method for the injection-moulding of flat optical data carriers which have a precise weight, wherein in a first phase a metered amount of melt is injected via a mass pad (MP) and an injection nozzle (7) into a predetermined mould cavity (24) consisting of two moulds halves (12, 23) and die stamping is then applied to a melt that is still liquid in a stamping phase, wherein the stamping phase comprises a first stage prior to the setting of the sprue, **characterised in that** at the end of the injection phase or in the first stage of the stamping phase when the melt is still liquid at least one relevant process parameter, in particular of the pressure or of the pressure gradient and/or the stamping force or the stamping force gradient and/or the path and/or the time, is detected and any errors in the amount of the melt in the mould cavity (24) in the first stage of the stamping phase are corrected before the sprue is set by influencing the flow conditions of the melt between the mould cavity (24) and the mass pad (MP) in front of the injection nozzle (7).

**2.** Method according to claim 1, **characterised in that** the amount error is corrected by changing the pressure or the pressure gradient in the mould cavity (24).

**3.** Method according to either claim 1 or claim 2, **characterised in that** an amount error is identified by detecting the stamping force and the stamping force gradient in a defined position or a defined time and the amount error is corrected by changing the stamping parameters.

**4.** Method according to any one of claims 1 to 3, **characterised in that** the amount of melt in the mould cavity (24) is corrected by detection of the pressure and the pressure gradient of the mass in the mould cavity (24) by correcting the injection pressure and corresponding flow influence in the mass pad in front of the injection nozzle (7).

**5.** Method according to any one of claims 1 to 4, **characterised in that** the first stage of the stamping phase occurs in a speed-regulated manner and **in that** the weight error is introduced in the first stage of the stamping phase as a result of the introduction of a correction in the speed of the stamping movement.

**6.** Method according to any one claims 1 to 5, **characterised in that** the entire stamping phase is speed-controlled/regulated, wherein the stamping force or the stamping force gradient is detected in the first stage of the stamping phase and a weight error is corrected by varying the speed on the basis of a set value/actual value comparison by varying the subsequent stamping process.

**7.** Method according to any one of claims 1 to 6, **characterised in that** the stamping gap is position-regulated and the pillar expansion is taken into account as a correction (in accordance with the stamping force build-up).

**8.** Method according to any one claims 1 to 7, **characterised in that** the two mould halves (12, 23) are held between a driven plate (16) and a counter plate (5) above pillars (30) and are secured by means of an electromechanical drive, and the drive means are programme-controllable in terms of a basic programme on the basis of the path function of the driven plate (16) and the effective compression.

## EP 1 343 621 B1

9. Method according to claim 8, **characterised in that** the compression function (K x F) is determined on the basis of the machine expansion (K) and the effective compression force (F).

10. Method according to either claim 8 or claim 9, **characterised in that** the electric motor drive is effected via a servomotor and the mechanical overdrive via a crank, a cam, a toggle lever or via racks.

11. Method according to claims 8 to 10, **characterised in that** the mechanical overdrive is effected via a crank or a cam and the path function is derived from the crank and cam position (φ) and determined according to the position recognition from the adjustment of the servomotor.

12. Method according to claims 8 to 11, **characterised in that** the total stamping stroke or compression path is determined from the path function of the driven plate [f(φ)] and the compression function (K x F), and the drive means are controlled at least during a plurality of partial stamping steps according to a speed programme.

13. Drive and control device for injection moulds (12, 23) of an injection-moulding machine having a controllable/regulatable injection and stamping phase, in particular for the production of flat data carriers, wherein, in the closed position, the injection moulds form a mould cavity (24), into which an injection nozzle (7) opens and wherein a device for forming a mass pad (MP) is provided, and wherein the control device comprises at least one detector for detecting at least one relevant process parameter for the stamping course, and wherein the stamping phase comprises a first stage prior to the setting of the sprue, **characterised in that** the control device is configured such that any error in the amount of the melt in the mould cavity (24) is detected at the end of the injection phase or in the first stage of the stamping phase and is corrected in the first stage of the stamping phase prior to the setting of the sprue by influencing the flow conditions of the melt between the mould cavity and the mass pad in front of the injection nozzle.

14. Drive and control device according to claim 13, **characterised in that** an electromechanical drive and a basic programme control, by means of which at least individual partial stamping steps can be controlled on the basis of the path function of a driven plate (16) and the effective compression or the corresponding machine expansion, are provided.

15. Drive and control device according to either claim 13 or claim 14, **characterised in that** it comprises a toggle lever rack drive, cam or crank drive, which, on the one hand, is supported on the fixed plate and, on the other hand, is connected to the driven plate, wherein, in the case of a cam or crank drive, said drive is configured such that the stamping stroke for maximum compression can be used near the dead centre.

16. Drive and control device according to any one of claims 13 to 15, **characterised in that** the electromechanical drive comprises a servomotor having position recognition for the driven plate, wherein the individual stamping steps can be controlled via a speed programme.

**Revendications**

1. Procédé de moulage par injection de supports de données optiques plats, ayant un poids précis, une quantité dosée de masse fondue étant injectée au cours d'une première phase par l'intermédiaire d'un matelas de matière (MP) et d'une buse d'injection (7) dans une empreinte (24) prédéfinie formée par deux demi-moules (12, 23) et ensuite, une pression d'estampage étant appliquée au cours d'une phase d'estampage sur la masse fondue encore liquide, la phase d'estampage comprenant une première partie avant la solidification de la masselotte,
   **caractérisé en ce que**,
   à la fin de la phase d'injection ou au cours de la première partie de la phase d'estampage, lorsque la masse fondue est encore fluide, au moins un paramètre de processus significatif, notamment de la pression et/ou du gradient de pression et/ou de la force d'estampage et/ou du gradient de force d'estampage et/ou du trajet et/ou du temps est détecté et une erreur de quantité éventuelle de la masse fondue dans l'empreinte (24) est corrigée au cours de la première partie de la phase d'estampage, avant la solidification de la masselotte, en influençant les conditions d'écoulement de la masse fondue entre l'empreinte (24) et le matelas de matière (MP) devant la buse d'injection (7) .

2. Procédé selon la revendication 1,
   **caractérisé en ce que**

l'erreur de quantité est corrigée en modifiant la pression et/ou le gradient de pression dans l'empreinte (24).

3. Procédé selon la revendication 1 ou 2,
   **caractérisé**
   **en ce qu'**une erreur de quantité est identifiée par une détection de la force d'estampage et/ou du gradient de force d'estampage dans une position définie et/ou un temps défini et l'erreur de quantité est corrigée en modifiant les paramètres d'estampage.

4. Procédé selon les revendications 1 à 3,
   **caractérisé en ce que**
   la quantité de masse fondue dans l'empreinte (24) est corrigée par une détection de la pression et/ou du gradient de pression de la matière dans l'empreinte (24) en corrigeant la pression d'injection et l'influence d'écoulement correspondante dans le matelas de matière devant la buse d'injection (7).

5. Procédé selon l'une quelconque des revendications 1 à 4,
   **caractérisé en ce que**
   la première partie de la phase d'estampage s'effectue avec un réglage de la vitesse et l'erreur de poids est initiée encore au cours de la première partie de la phase d'estampage en initiant une correction de la vitesse du déplacement d'estampage.

6. Procédé selon l'une quelconque des revendications 1 à 5,
   **caractérisé en ce que**
   la vitesse de la phase d'estampage totale est commandée/réglée, la force d'estampage et/ou le gradient de force d'estampage étant détectés au cours de la première partie de la phase d'estampage et une erreur de poids étant corrigée en faisant varier le gradient d'estampage adjacent sur la base d'une comparaison théorique-effective d'une variation de la vitesse.

7. Procédé selon l'une quelconque des revendications 1 à 6,
   **caractérisé en ce que**
   la position de la fente d'estampage est réglée et, en fonction de l'établissement de la force de pression, la dilatation de la colonne est considérée comme une correction.

8. Procédé selon l'une quelconque des revendications 1 à 7,
   **caractérisé en ce que**
   les deux demi-moules (12, 23) sont maintenus entre une plaque entraînée (16) et une plaque de renforcement (5) par l'intermédiaire de colonnes (30) et sont précontraints au moyen d'un entraînement électromécanique, et les moyens d'entraînement peuvent être commandés par un programme selon un programme de base sur la base de la fonction trajet de la plaque entraînée (16) et de la compression efficace.

9. Procédé selon la revendication 8,
   **caractérisé en ce que**
   la fonction compression (K x F) est déterminée sur la base de la dilatation mécanique (K) et de la force de compression efficace (F).

10. Procédé selon la revendication 8 ou 9,
    **caractérisé en ce que** l'entraînement électromoteur s'effectue par l'intermédiaire d'un servomoteur et la transmission mécanique par l'intermédiaire d'une manivelle, d'un excentrique, d'un levier coudé ou par l'intermédiaire de crémaillères.

11. Procédé selon la revendication 8 à 10,
    **caractérisé en ce que**
    la transmission mécanique s'effectue par l'intermédiaire d'une manivelle ou d'un excentrique et la fonction trajet est déduite de la position de la manivelle ou de l'excentrique ($\varphi$) et est déterminée en fonction de la détection de position à partir du réglage du servomoteur.

12. Procédé selon la revendication 8 à 11,
    **caractérisé en ce que**
    la levée d'estampage totale et/ou le trajet de compression sont déterminés à partir de la fonction trajet de la

plaque entraînée [f(φ)] et de la fonction compression (K x F) et les moyens d'entraînement sont commandés selon un programme de vitesse au moins pendant plusieurs étapes partielles d'estampage.

**13.** Système d'entraînement et de commande pour moules de moulage par injection (12, 23) d'une machine à mouler par injection (10) comprenant une phase d'injection et d'estampage pouvant être commandée/réglée, notamment pour la fabrication de supports de données plats, les moules de moulage par injection formant en position fermée une empreinte (24) dans laquelle débouche une buse d'injection, et un dispositif de moulage d'un matelas de matière (MP) étant prévu, et le système de commande comprenant au moins un détecteur pour capter au moins un paramètre de processus significatif pour le déroulement de l'estampage, et la phase d'estampage comprenant une première partie avant la solidification de la masselotte,

**caractérisé en ce que**

le système de commande est dimensionné de telle sorte qu'une erreur de quantité éventuelle de la masse fondue dans l'empreinte (24) est détectée à la fin de la phase d'injection ou au cours de la première partie de la phase d'estampage et peut être corrigée au cours de la première partie de la phase d'estampage avant la solidification de la masselotte en influençant les conditions d'écoulement de la masse fondue entre l'empreinte et le matelas de matière devant la buse d'injection.

**14.** Système d'entraînement et de commande selon la revendication 13,

**caractérisé**

**en ce qu'**un entraînement électromécanique ainsi qu'une commande de programme de base sont prévus, par l'intermédiaire desquels au moins des étapes partielles individuelles d'estampage peuvent être commandées sur la base de la fonction trajet d'une plaque entraînée (16) et de la compression efficace et/ou de la dilatation mécanique correspondante.

**15.** Système d'entraînement et de commande selon l'une quelconque des revendications 13 ou 14,

**caractérisé**

**en ce qu'**il comprend un entraînement à levier coudé, à crémaillères, à excentrique ou à manivelle, qui s'appuie d'une part sur la plaque fixe et est relié d'autre part à la plaque entraînée, sachant que, dans le cas d'un entraînement à excentrique ou à manivelle, celui-ci est dimensionné de telle sorte que la levée d'estampage peut être utilisée pour la compression maximale à proximité du point mort.

**16.** Système d'entraînement et de commande selon l'une quelconque des revendications 13 à 15,

**caractérisé en ce que**

l'entraînement électromécanique comprend un servomoteur à détection de position pour la plaque entraînée, les étapes d'estampage individuelles pouvant être commandées par l'intermédiaire d'un programme de vitesse.

EP 1 343 621 B1

Fig. 1

VPr
Pr
VDp
VDE
PrR
DB1, DB₁*
SP
VPM
Prägen
Ak
EDK
E
DA1
Rückstromsperre
DK
MP
V VEinspr.

Fig. 2

S
5
Kav
1
7
12
2
Dos
Ma
Fig. 2

Kompressionsspalt

%
193°C
12
149°C
10
23°C
relative Volumenänderung
8
6
4
Fig. 3a
2

4000     8000   bar  12000

Druck

1,00
cm³/g
Fig. 3b
0,95
spezifisches Volumen V
Druck p =1bar
0,90
200
400
600
1000
0,85
1600
4835
0,80
0   100   200  °C  300

Temperatur

16

Fig. 5a

Fig. 5b

Fig. 5c

X

**Offen**    **Schliessen**  →      A   B      **offen**

Form Lage

**Einspritzen**   **Prägen**    **Öffnen**

**Kühlen**

**Fig. 4a**

t

z.B. 200°C 800 bar

F

**Prägekraft**

Xk

X

z.B. 120°C 1 bar

**Fig. 4b**

t

① ② ③ ④ ⑤

S

**Spalt**

**Disc Dicke**

**Fig. 4c**

t

S

**Schnecke**

**Fig. 4d**

t

**Bereich der Kraftmessung**

**Fig. 6a**

$V_{FS}$

V

x (mm)

Offen
Pog

"S34"
Prä
Sp

**Fig. 6b**

V

$V_{2P}$

$V_{3P}$

$V_{1P}$

$V_{4P}$

Prägeende = $\varphi$ 150
(Mir SKR)

Prägespalt

Sp1    Sp2    Sp3

x (mm)

Prägeziel

**Fig. 6c**

VFÖ

V

VRed

x (mm)

S
Red
Ende

Offen
Pos.

**Fig. 7a**

**Fig. 7b**

**Fig. 7c**

Fig. 8a

Fig. 8b

Kurbel

$e = \frac{H}{2}$

Fig. 8c

$R_1, R_2,$
$R_3$ usw.

C

$St_1$
$St_2$

$St_3$

ev. gleit.

Fig. 9a

Fig. 9b

Fig. 10

Fig. 11

Fig. 12